(19) Europäisches Patentamt
European Patent Office
Office européen des brevets

(11) **EP 3 182 662 B1**

(12) **EUROPEAN PATENT SPECIFICATION**

(45) Date of publication and mention
of the grant of the patent:
**22.01.2020 Bulletin 2020/04**

(51) Int Cl.:
*H04L 25/06* *(2006.01)*     *H04B 7/02* *(2018.01)*

(21) Application number: **15200123.6**

(22) Date of filing: **15.12.2015**

(54) **SOFT LLR/BIT COMBINING FOR COMP OR SOFT HANDOVER RECEIVER**

SOFT-KOMBINIERUNG VON BITS/LLR FÜR EINEN COMP ODER SOFT HANDOVER EMPFÄNGER

COMBINAISON SOUPLE DE BITS/LLR POUR UN RÉCEPTEUR DE TYPE COMP OU HANDOVER SOUPLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.06.2017 Bulletin 2017/25**

(73) Proprietor: **Intel IP Corporation
Santa Clara, CA 95054 (US)**

(72) Inventors:
• **SCHOLAND, Tobias
47259 Duisburg (DE)**
• **BOLINTH, Edgar
41352 Korschenbroich (DE)**
• **KOKKE, Robert
6581 cv malden (NL)**
• **SALIM, Umer
06600 Antibes (FR)**
• **ESCH, Thomas
41564 Kaarst (DE)**

(74) Representative: **Viering, Jentschura & Partner mbB
Patent- und Rechtsanwälte
Am Brauhaus 8
01099 Dresden (DE)**

(56) References cited:
**WO-A1-2014/040130**

• **MITSUBISHI ELECTRIC: "Comparison of combining schemes for MBMS", 3GPP DRAFT; R1-040679, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. CANNES, France; 20040621 - 20040624 18 June 2004 (2004-06-18), XP050951783, Retrieved from the Internet: URL:http://www.3gpp.org/ftp/tsg_ran/WG1_RL 1/TSGR1_AH/Rel-6_AH_0406/Docs/ZIPs/ [retrieved on 2004-06-18]**
• **"Joint Processing Downlink COMP Reference Signal Support", 3GPP DRAFT; R1-090586 TI COMP RS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20090212 - 20090216, 3 February 2009 (2009-02-03), XP050597221, [retrieved on 2009-02-03]**

## Description

### Technical Field

Embodiments described herein generally relate to communication terminals and method for receiving data.

### Background

Modern communication terminals may comprise technologies like soft handover and coordinated multipoint transmission where a plurality of base stations send coordinated signals to the communication terminal which allows exploiting the diversity of different mobile communication channels. 3GPP draft R1-090586 by Texas Instruments: "Joint Processing Downlink COMP Reference Signal Support", vol. RAN WG1, 03.02.2009, discloses non-coherently combining soft bits (LLRs) at a user equipment after equalization/demodulation and before FEC decoding.

3GPP Tdoc R1-040679 by Mitsubishi Electric: "Comparison of combining schemes for MBMS", vol. RAN WG1, 18.06.2004, describes LLR combining in a UE receiving MBMS transmissions.

Approaches that allow high performance and require low implementation complexity for such technologies are desirable.

### Brief Description of the Drawings

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:

Figure 1   shows a communication arrangement.

Figure 2   shows a baseband receiver supporting soft combining.

Figure 3   shows a time diagram illustrating a corresponding timing of the signal processing of the baseband receiver of figure 2 assuming an example scenario involving two cells for soft-combining.

Figure 4   shows a baseband receiver using LLR based soft-combining.

Figure 5   shows a time diagram illustrating a corresponding timing of the signal processing of the baseband receiver of figure 4 assuming an example scenario involving two cells for soft-combining.

Figure 6   shows a baseband receiver using LLR based soft-combining according to another example.

Figure 7   shows a time diagram illustrating a corresponding timing of the signal processing of the baseband receiver of figure 6 assuming an example scenario involving two cells for soft-combining.

Figure 8   shows a baseband receiver using LLR based soft-combining according to a further example.

Figure 9   shows a time diagram illustrating a corresponding timing of the signal processing of the baseband receiver of figure 8 assuming an example scenario involving two cells for soft-combining.

Figure 10  shows a communication terminal.

Figure 11  shows a flow diagram, for example carried out by a communication terminal.

### Description of Embodiments

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

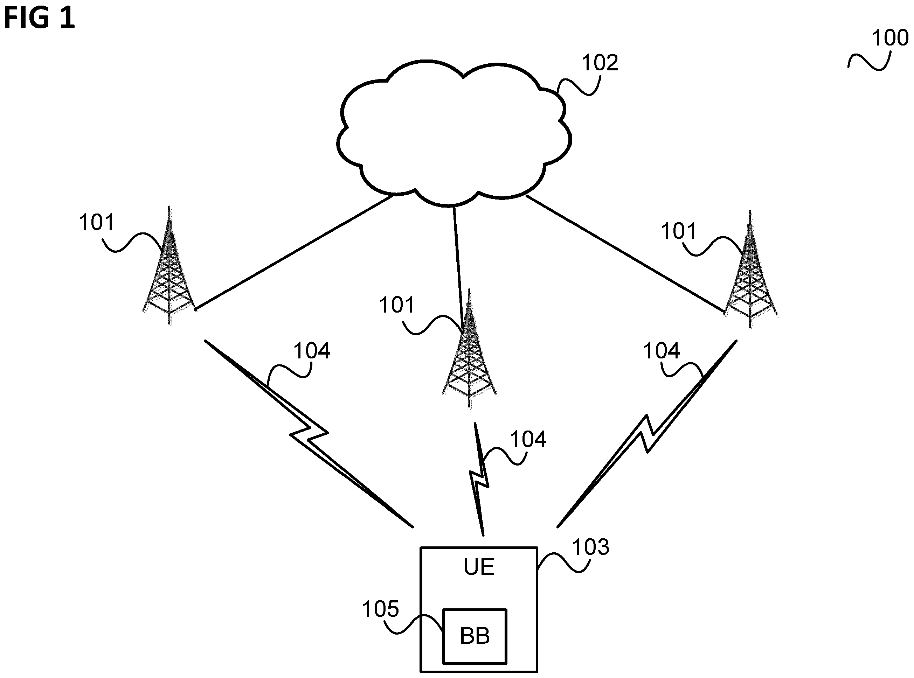

Throughput and call reliability is one of the most important key performance indicators (KPI) of a mobile device (e.g. a user equipment, UE). It is mainly influenced by the wireless cellular standard and the receiver structure that are used. In particular for the downlink (DL), wireless cellular standards include techniques like soft-handover (SHO, used in 3G) or network MIMO (Multiple Input Multiple Output)/coordinated multipoint transmission (CoMP) used in LTE-A. With such techniques coordinated signals are sent from multiple base stations (e.g. NB or eNB) to one mobile device at the same time. An example of such a configuration is shown in figure 1.

Figure 1 shows a communication arrangement 100.

The communication arrangement 100 includes a plurality of base stations 101 which belong to a cellular mobile communication network, e.g. according to UMTS (Universal Mobile Telecommunications System), LTE (Long Term Evolution), LTE-A (LTE Advanced) or GSM (Global System for Mobile Communications).

The base stations 101 are interconnected via a network 102, e.g. via one or more RNCs (Radio network controllers) in case the base stations 101 belong to a UMTS communication system.

A mobile terminal 103 (also referred to as UE for UMTS and LTE) has a respective communication connection 104 to each base station 101, e.g. for a soft handover in case of a UMTS communication system or for using CoMP in an LTE-A communication system.

Such SHO or CoMP allows the receiver in the mobile terminal 103 to exploit the diversity of the different mobile radio channels between the involved base stations 101(also referred to as NB or eNB for UMTS and LTE) and the mobile terminal 103 to strengthen the demodulation performance. As a result throughput and call reliability can be increased.

For this, the corresponding baseband (BB) receiver algorithm performed in a baseband receiver 105 on the UE side supports joint reception and detection of all involved NB signals which is referred to as soft combining in the following. This introduces a trade-off between performance and implementation complexity which is also one of the most important KPIs of mobile devices. Performance and implementation complexity of SHO and CoMP capable mobile devices are addressed in the following.

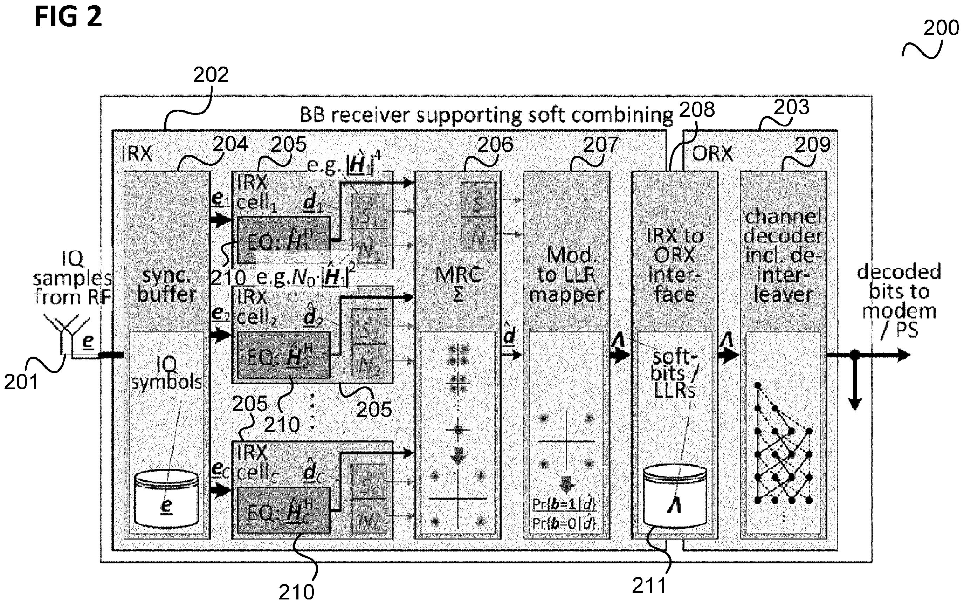

Figure 2 shows a baseband receiver 200 supporting soft combining.

In this example, a soft-handover or coordinated multipoint transmission scenario involving C NBs or radio cells is assumed in which each of a plurality of base stations 101 transmits, via a respective radio cell, a channel coded bit sequence b by one (single layer transmission: single input single output (SISO) or single input multiple output (SIMO)) or more (multiple layer transmission: multiple input multiple output (MIMO)) complex valued modulated symbols $\underline{d}$. The modulation may for example be BPSK (binary phase shift keying), QPSK (quadrature phase shift keying), QAM (quadrature amplitude modulation), etc.

The base stations 101 may, after this modulation, apply subsequent beamforming or MIMO processing as well as the respective multiple access technology like CDMA (Code Division Multiple Access including spreading and scrambling) or OFDMA (Orthogonal Frequency Division Multiple Access) as well as analog modulation and radio frequency (RF) transmission. The base stations 101 transmit the resulting cells signal to the UE 105 via cell specific mobile radio channels (e.g. corresponding to connections 104). This cell signals are overlaid at the UEs one or more receive antennas 201.

After RF (radio frequency) processing (e.g. by an RF frontend component of the mobile terminal 103) the corresponding base band (BB) receive signal is represented by the complex valued received IQ samples e containing multiple BB received signals if the UE supports multiple receive antennas (SIMO, MIMO). Each base station's (or cell's) contribution from $\underline{d}$ to $\underline{e}$ is described by the cell specific system channel matrices $\underline{H}_1...\underline{H}_C$ (which may more generally be referred to as channel parameters) wherein C is the number of base stations or cells.

The baseband receiver 200 comprises an inner receiver (IRX) 202 and an outer receiver (ORX) 203. The IRX 202 first stores the received IQ samples $\underline{e}$ resulting from the RF front-end processing in a synchronization buffer 204. This synchronization buffer 204 allows compensating different timings and radio channel access delay of the involved C NBs 101 (or cells).

For each NB 101, the inner receiver comprises an IRX component, referred to as cell IRX 205, numbered 1,...,C, which is served from the synchronization buffer 204 by a corresponding delay compensated receive signal $\underline{e}_i$ (i= 1, ..., C), i.e. a version of $\underline{e}$ with a delay compensation specific for this NB 101 (i.e. depending on the delay for this NB 101, e.g. depending on the distance of the UE 103 to the NB 101).

The cth cell IRX 205 generates a synchronized equalized symbols $\hat{\underline{d}}_c$ from $\underline{e}_c$, e.g. by means of equalizers 210 performing an equalization based on the respective channel matrix $\underline{H}_c$. In summary, the cell IRXs 205 generate, from the $\underline{e}_1,...,\underline{e}_C$, synchronized equalized symbols $\hat{\underline{d}}_1,...,\hat{\underline{d}}_C$ at their outputs. A typical per cell equalizer (EQ) implementation for single layer transmission in CDMA is the Rake receiver. The Rake receiver's underlying algorithm is a matched filter (MF) given by $\hat{\underline{H}}^H_c$ matched to the mobile channel estimate $\hat{\underline{H}}_c$. Other typical IRX receivers include e.g. MMSE (minimum mean square error) equalization techniques which are also applicable to MIMO systems.

The inner receiver 202 then performs subsequent soft-combining of the per cell equalizer outputs $\hat{\underline{d}}_1...\hat{\underline{d}}_C$, e.g. by maximum ratio combining (MRC) 206 to obtain the equalized (i.e. estimated) symbol $\hat{\underline{d}}$ having maximized signal to

$$\hat{\underline{d}} = \sum_{c=1}^{C} \hat{\underline{d}}_c$$

noise ratio. To allow maximum ratio combining by simple complex addition of the MRC inputs it is assumed that each cell IRX output consists of a correlated and coherent useful component signal and an uncorrelated noise component. $\hat{S}_1...\hat{S}_C$ and $\hat{N}_1...\hat{N}_C$ are used in the following to denote the corresponding useful signal energy and noise energy, respectively. In case of the Rake MF receiver e.g. $\hat{S}_c = |\hat{\underline{H}}_c|^4$, $\hat{N}_c = N_0 \cdot |\hat{\underline{H}}_c|^2$, c=1,...,C are assumed, $N_0$ being the spectral noise power density at the equalizer input. This corresponds to the typical assumption that at equalizer input the per cell signal energy is equal to the per cell mobile channel energy while having cell independent thermal only noise power level $N_0$.

After MRC 206 the inner receiver 202 performs a mapping 207 of the complex valued symbol estimate $\hat{\underline{d}}$ to

soft-bits or log likelihood ratios (LLRs) $\Lambda$. It is typically assumed that including equalization the transmit symbol $\underline{d}$ is given by an uncorrelated Gaussian channel i.e. $\hat{\underline{d}}=(\hat{S})^{1/2}\underline{d}+\underline{n}$, $E\{\underline{d}^2\}=1$, $E\{\underline{n}^2\}=\hat{N}$. For optimal subsequent channel decoder performance these soft-bits should represent so-called true LLRs $\Lambda=\ln(Pr\{b=1|\hat{\underline{d}}\}/Pr\{b=0|\hat{\underline{d}}\})$. Under the above MF assumption of cell independent noise power level $N_0$ one could e.g. assume $\hat{S}=(\sum_{i=1}^{C}|\hat{\underline{H}}_c|^2)^2$ and

$$\hat{N}=N_0\cdot\sum_{i=1}^{C}|\hat{\underline{H}}_c|^2=N_0\cdot(\hat{S})^{1/2}.$$

If for example Gray encoded QPSK transmission is assumed such that $\underline{d}\in\{1+j,1-j,-1+j,-1-j\}/(2)^{1/2}$ the true LLR becomes

$$\Lambda=[\Lambda_{Re}, \Lambda_{Im}]=4/N_0\cdot 1/(2)^{1/2}\cdot[Re\{\hat{\underline{d}}\}, Im\{\hat{\underline{d}}\}]:$$

$$\Lambda_{Re}=\ln(Pr\{Re\{\underline{n}\}=Re\{\hat{\underline{d}}\}-(\hat{S}/2)^{1/2}\}/Pr\{Re\{\underline{n}\}=Re\{\hat{\underline{d}}\}+(\hat{S}/2)^{1/2}\})$$

$$=\ln(\exp\{-|Re\{\hat{\underline{d}}\}-(\hat{S}/2)^{1/2}|^2/(2\cdot\hat{N}/2)\}/\exp\{-|Re\{\hat{\underline{d}}\}+(\hat{S}/2)^{1/2}|^2/(2\cdot\hat{N}/2)\})$$

$$=4\cdot Re\{\hat{\underline{d}}\}(\hat{S}/2)^{1/2}/\hat{N}=4\cdot Re\{\hat{\underline{d}}\}(\hat{S}/2)^{1/2}/(N_0\cdot(\hat{S})^{1/2})=4/N_0\cdot 1/(2)^{1/2}\cdot Re\{\hat{\underline{d}}\}$$

$$\Lambda_{Im}=4/N_0\cdot 1/(2)^{1/2}\cdot Im\{\hat{\underline{d}}\}$$

Nevertheless, in typical soft-combining capable BB receiver implementations soft-bits $\Lambda$ do not always follow the true LLR definition given above because of a) wrong assumptions in MRC (e.g. noise power is not cell independent) or b) final wrong overall scaling (like $\Lambda=\lambda\cdot\ln(Pr\{b=1|\hat{\underline{d}}\}/Pr\{\{b=0|\hat{\underline{d}}\})$, $\lambda\neq 1$) caused e.g. by wrong assumptions about the MRC outputs signal energy $\hat{S}$ and noise level $\hat{N}$. While a) leads to general degradation of subsequent channel decoding b) has typically only an impact when iterative channel decoding like for turbo-codes is used.

The inner receiver 202 feeds the LLRs generated by the LLR mapper 207 via an IRX to ORX interface 208 to a channel decoder (including a deinterleaver) 209 of the outer receiver 203.

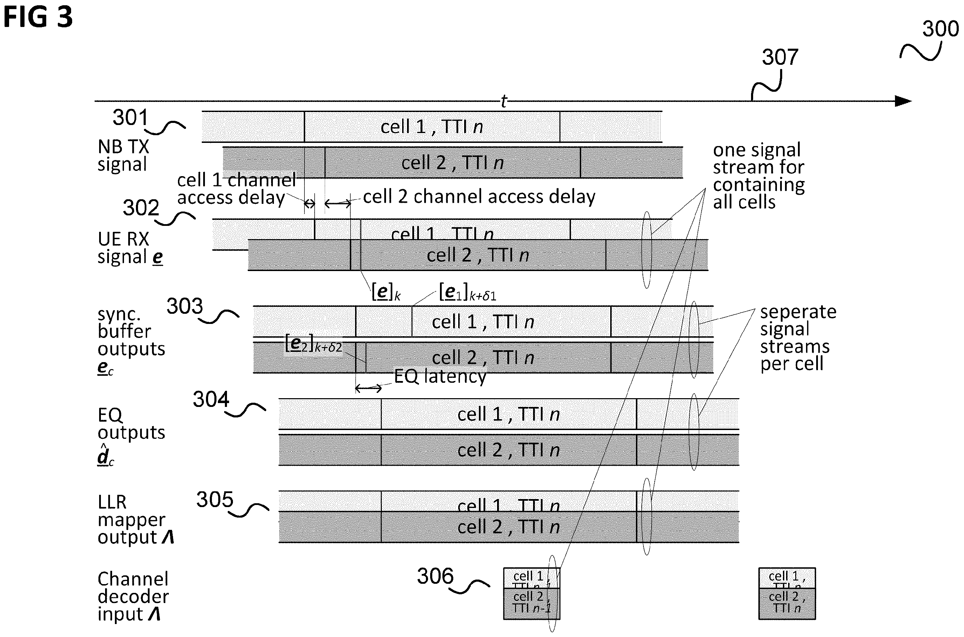

Figure 3 shows a time diagram 300 illustrating a corresponding timing of the signal processing described above with reference to figure 2 assuming an example scenario involving two cells for soft-combining.

The time diagram 300 shows the transmitted base station signals 301, the received signal $\underline{e}$ 302, the outputs $\underline{e}_c$ 303 of the synchronization buffer 204, the equalizer outputs $\hat{\underline{d}}_c$ 304, the output $\Lambda$ 305 of the LLR mapper 207 and the channel decoder input $\Lambda$ 306. Time flows from left to right in figure 3 in accordance with a time axis 307.

As illustrated in figure 3, the slight asynchronously transmitted TX signals from the NBs are additionally delayed by the corresponding channel access delays. The UE receive signal e contains overlaid signal from both cells. The cell equalizers 205 are fed by delayed versions $\underline{e}_c$ of e using cell specific delays $\delta_c$, c=1...C (wherein C=2 in this example). After equalizer independent latency the symbol estimates $\hat{\underline{d}}_c$, c=1...C are MRC soft-combined and mapped to soft-bits (i.e. LRRs) $\Lambda$. Final channel decoding is typically done burst wise but must typically wait until a transmission time interval (TTI) is received completely due to de-interleaving.

The soft-bits $\Lambda$ are fed to channel decoder 209 to provide decoded bits to the protocol stack (PS) or to another modem functionality (e.g. decoded BB modem control channels). Since the IRX 202 usually has stream like or short block wise processing but ORX processing is long block wise the interface 208 between IRX 202 and ORX 203 typically comprises a buffer memory 211 to store soft-bits $\Lambda$ from the IRX 202 before they are processed by the ORX 203.

In a BB receiver structure as illustrated in figure 2 the used MRC operation 206 is typically only well suited if all cells equalizers 210 follow the same algorithm and the same implementation having same equalizer latency. Namely, in case different equalizer algorithms per cell are combined, like MF, Zero Forcing (ZF), minimum mean square error (MMSE) or non-linear advanced equalization like interference cancellation, a simple MRC soft-bit summation might not offer the true LLR for best ORX performance and thus the benefit of such per cell adaptive equalization may potentially be lost. Further, if the per cells equalizer implementations have different equalization latencies the receiver structure compensates this by an extended sync-buffer to still have synchronized equalizer outputs for MRC operation.

As described in the following examples, another mechanism for soft-combining, e.g. for SHO or CoMP usage in a wireless communication system is provided. Instead of applying MRC soft-combining in the complex valued IQ domain like for the implementation shown in figure 2 the approach described in the following examples uses LLR/soft-bit based combining of the received signals from individual involved cells:

- For each cell a cell individual equalizer may be used like MF, Zero Forcing (ZF), minimum mean square error (MMSE) or non-linear advanced equalization like interference cancellation
- At each cells equalizer output a per cell soft-bit/true LLR mapping is done before soft-combining
- Soft combining of the soft-bits/true LLRs from all cells is applied afterwards in real valued per bit domain by adding all cells soft-bits/true LLRs.

Per cell synchronization is for example finally done after equalization:

- Synchronization depth by the synchronization buffer may be reduced or the synchronization buffer may be removed completely i.e. all cells equalizers are feed with same input signal.
- Per cell synchronization may be done as part of soft-combining before channel decoding by extended or reused soft-bit/LLR buffer in IRX to ORX interface.

The use of soft-combining on soft-bit /trueLLR level allows achieving the following in comparison to the receiver structure of figure 2:

- It allows using equalizer algorithms other than MF, e.g. for performance reasons. Due to complexity this might not be possible for all involved cells so that different equalizer algorithm outputs must be soft-combined which might be suboptimal using MRC. In addition to cost reasons adaptive equalization might also be a reason for cell specific equalizer algorithm usage. The use of true LLRs gives a generalized definition independent from the equalizer algorithm. This allows equalizer algorithm independent soft-combining in contrast to the MRC used in the BB receiver 200. As a result the demodulation performance can be enhanced.
- By adding cell synchronization to the soft-combining operation the synchronization buffer size can be reduced compared to the baseband receiver 200. For using cell dependent equalization algorithms having particular equalization latencies the synchronization buffer 204 would need to be extended (in size to handle longer delays) to still provide synchronized input to the MRC 206. The use of soft-combining on soft-bit/true LLR level allows avoiding an extension of the synchronization buffer can be avoided up to the removal of the complete synchronization buffer. As a result the complexity (and thus the required chip area) and potentially power consumption may be decreased.

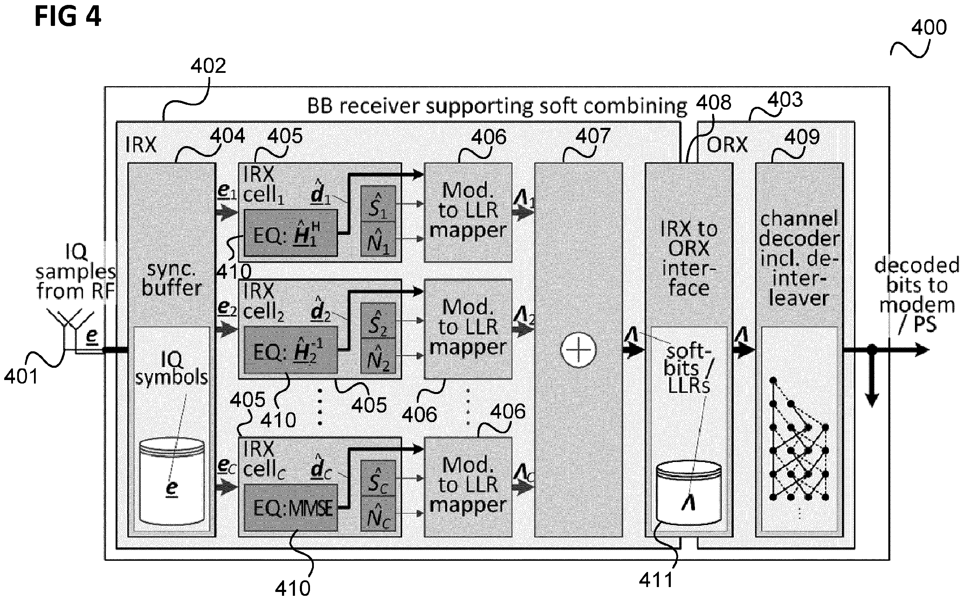

An example for a baseband receiver structure using LLR based soft-combining for SHO or CoMP is described in the following with reference to figure 4

Figure 4 shows a baseband receiver 400.

Similarly to the baseband receiver 200, the baseband receiver 400 comprises one or more antennas 401, an inner receiver 402 having a synchronization buffer 404, cell IRXs 405 having equalizers 410, an outer receiver 403 having a channel decoder 409 and an IRX to ORX interface 408.

As explained with reference to figure 2, the synchronization buffer 404 is supplied with complex valued received IQ samples $\underline{e}$ and serves the cell IRXs with served delay compensated receive signals $\underline{e}_c$ (c= 1, ..., C). The cth cell IRX 405 generates synchronized equalized symbols $\underline{\hat{d}}_c$ from $\underline{e}_c$. However, in contrast to the baseband receiver 200, the cell IRXs 405 may use different equalizer algorithms. For example, the Cth cell IRX 405 generates $\hat{d}_C$ based on MMSE.

For cell specific equalization e.g. MF algorithm $\underline{\hat{H}}^H_c$, ZF algorithm $\underline{\hat{H}}^{-1}_c$, MMSE algorithm or even non-linear advanced equalization like interference cancellation may be used. Each equalizer 410 includes an equalizer output signal power estimator $\hat{S}_c$ and an equalizer output noise power estimator $\hat{N}_c$, c=1...C. Such estimation may be done directly based on equalizer output measurements or indirectly by transformation of equalizer input measurements taking the instantaneous equalizer transfer function into account.

Further, in contrast to the baseband receiver 200, the inner receiver 402 comprises a modulation to LLR mapper 406 for each cell IRX 405. The cth cell IRXs 405 provide $\hat{d}_c$ to the cth LLR mapper 406

Each LLR mapper 406 transforms a symbol estimate $\hat{d}_c$ to corresponding true LLR $\Lambda_c$ by using the signal and noise power estimates $\hat{S}_c$ and $\hat{N}_c$. An LLR mapping for QPSK may e.g. be done according to:

$$\Lambda_c=[\Lambda_{c,Re}, \Lambda_{c,Im}]=4\cdot(\hat{S}_c/2)^{1/2}/\hat{N}_c\cdot[Re\{\hat{\underline{d}}_c\}, Im\{\hat{\underline{d}}_c\}]$$

Further, (partial) scaling of the symbol estimates $\hat{\underline{d}}_c$ may be included already as part of the equalizer 410 to avoid the necessity to supply $\hat{S}_c$ and $\hat{N}_c$ to the LLR mapper 406.

After LLR mapping the LLRs $\Lambda_c$ (c=1,...,C) are supplied to a combiner 407 which performs soft-combining of the LLRs in non-complex LLR domain, e.g. by adding the LLRs $\Lambda_c$. The result $\Lambda$ is fed to the soft-bit/LLR buffer 411 of the IRX to ORX interface 408 and is then supplied to the channel decoder 409. Channel decoding may be run with the same timing as for the baseband receiver 200 as long as the increased equalization latencies allow it.

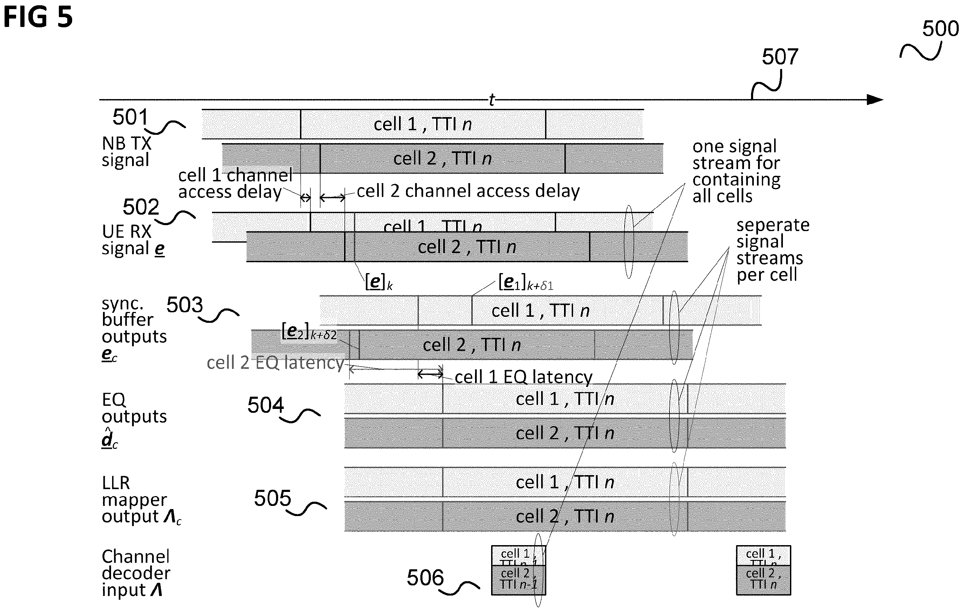

Figure 5 shows a time diagram 500 illustrating a corresponding timing of the signal processing described above with reference to figure 4 assuming an example scenario involving two cells for soft-combining.

The time diagram 500 shows the transmitted base station signals 501, the received signal $\underline{e}$ 502, the outputs $\underline{e}_c$ 503 of the synchronization buffer 404, the equalizer outputs $\hat{\underline{d}}_c$ 504, the LLRs $\Lambda_c$ 505 of the LLR mappers 406 and the channel decoder input $\Lambda$ 506. Time flows from left to right in figure 5 in accordance with a time axis 507.

To support the usage of cell specific equalizer algorithms and implementations having different equalization latencies the size of the synchronization buffer 404 is increased (e.g. with respect to the synchronization buffer 204). To still have cell synchronized equalizer outputs $\hat{\underline{d}}_c$ the timing of equalizer inputs $\underline{e}_c$, c=1...C already considers the different equalizer latencies as exemplary depicted in figure 5. In figure 5 the synchronization delay $\delta_1$ for cell 1 is increased to compensate for larger equalization latency of the equalizer for cell 2.

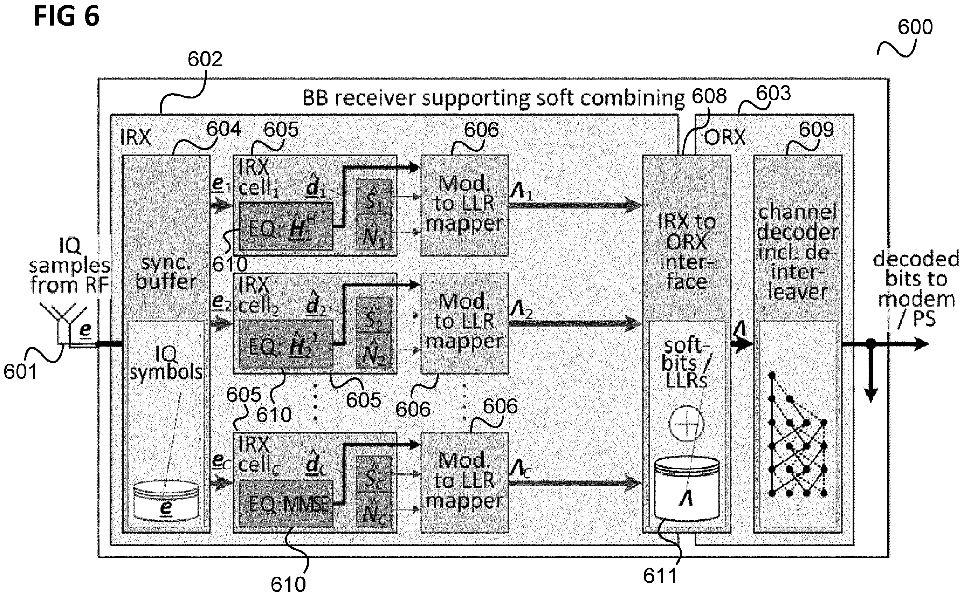

Figure 6 shows a baseband receiver 600 using LLR based soft-combining for SHO/CoMP according to another example.

Similarly to the baseband receiver 400, the baseband receiver 600 comprises one or more antennas 601, an inner receiver 602 having a synchronization buffer 604, cell IRXs 605 having equalizers 610, LLR mappers 606, an outer receiver 603 having a channel decoder 609 and an IRX to ORX interface 608.

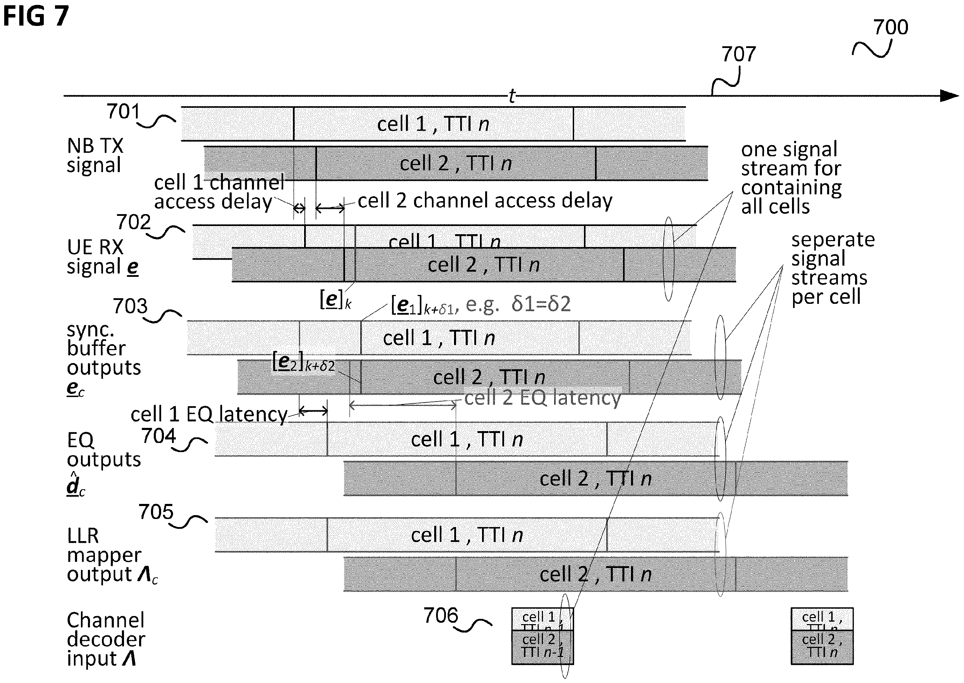

However, in contrast to the baseband receiver 400, the synchronization buffer 604 is shrunk (i.e. is reduced such that it supports only smaller delays; it may even be completely removed). As a result the timing of the equalizer $\underline{e}_c$, c=1...C inputs become closer or even have the same timing as exemplary depicted in figure 7.

Figure 7 shows a time diagram 700 illustrating a corresponding timing of the signal processing described above with reference to figure 6 assuming an example scenario involving two cells for soft-combining.

The time diagram 700 shows the transmitted base station signals 701, the received signal $\underline{e}$ 702, the outputs $\underline{e}_c$ 703 of the synchronization buffer 604, the equalizer outputs $\hat{\underline{d}}_c$ 704, the LLRs $\Lambda_c$ 705 of the LLR mappers 606 and the channel decoder input $\Lambda$ 706. Time flows from left to right in figure 7 in accordance with a time axis 707.

As illustrated, due to the reduction of the synchronization buffer 604 (in terms of the length of the possible delays) or its removal, in this example, $\delta1=\delta2$ i.e. $\underline{e}_1$ and $\underline{e}_2$ have the same timing, i.e. are supplied to the respective cell IRXs 605 at the same time.

For example, a small synchronization buffer is kept to decouple BB from RF processing or to partially compensate for different cell timing but not to consider different equalizer latencies as in the baseband receiver 400. Compared to the baseband receiver 400 implementation complexity (and thus chip area) can thus be reduced. If also different cell timing are not compensated this allows a synchronization buffer which is even smaller than in the baseband receiver 200.

As a result of the reduction of the synchronization buffer 604, the equalizer outputs $\hat{\underline{d}}_c$ are no longer cell synchronized. Cell synchronization is in this example done by feeding the soft-bits/LLRs $\Lambda_c$ to a soft-bit/LLR buffer 611 in the IRX to ORX interface 608. For soft-combining the IRX to ORX interface buffer 611 contains functionality to add cell specific soft-bits/LRRs $\Lambda_c$ while writing to the buffer 611:

- For the cell $c_{1st}$ having earliest timing (i.e. earliest LLR generation time) store $\Lambda=\Lambda_{c1st}$ in the buffer 611;
- For all other cells c=1...C$\neq c_{1st}$ having later timing store $\Lambda=\Lambda+\Lambda_c$ in the buffer 611.

An alternative is to initially clear the soft-bit/LRR buffer 611 and add the LLRs for all cells in the same way afterwards:

- Before cell having earliest timing is written to buffer 611 store $\Lambda=0$ in buffer 611;
- For all cells c=1...C store $\Lambda=\Lambda+\Lambda_c$ in buffer.

Due to de-interleaving used in channel decoding the soft-bit/LLR buffer 611 typically needs to be capable to store LLRs for more than one TTI anyhow and thus its size does not need to be extended compared to the baseband receiver 200 and the baseband receiver 400.

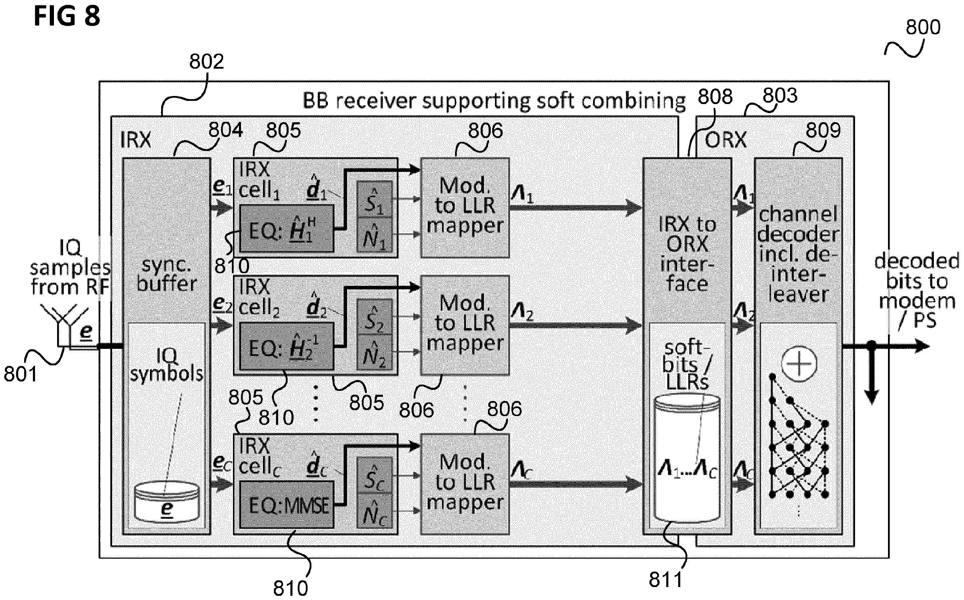

Figure 8 shows a baseband receiver 800 using LLR based soft-combining for SHO/CoMP according to a further example.

Similarly to the baseband receiver 600, the baseband receiver 800 comprises one or more antennas 801, an inner receiver 802 having a synchronization buffer 804, cell IRXs 805 having equalizers 810, LLR mappers 806, an outer receiver 803 having a channel decoder 809 and an IRX to ORX interface 808 having an soft-bit/LLR buffer 811.

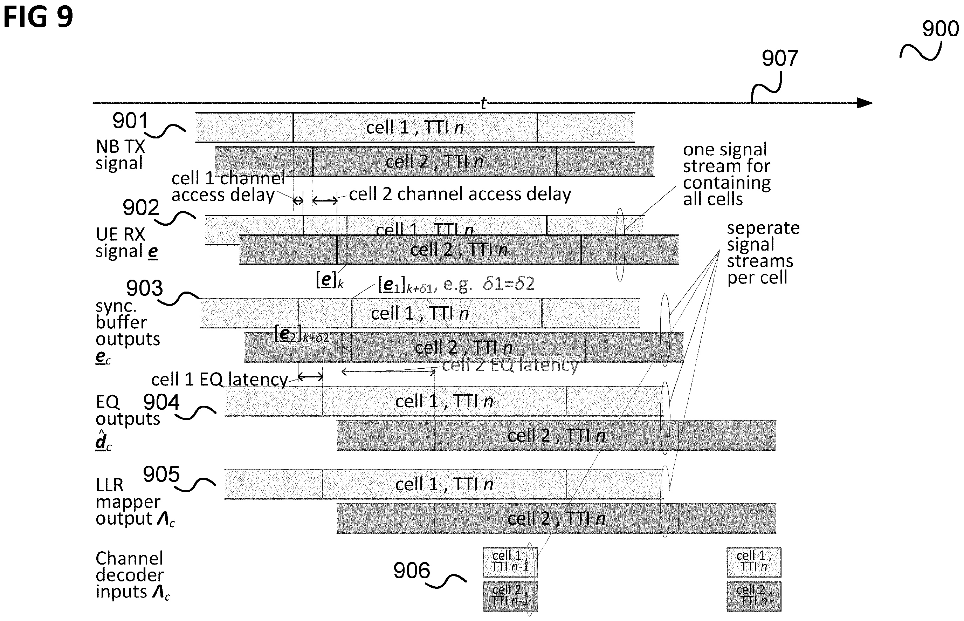

Figure 9 shows a time diagram 900 illustrating a corresponding timing of the signal processing described above with reference to figure 8 assuming an example scenario involving two cells for soft-combining.

The time diagram 900 shows the transmitted base station signals 901, the received signal $\underline{e}$ 902, the outputs

$\underline{e}_c$ 903 of the synchronization buffer 804, the equalizer outputs $\hat{\underline{d}}_c$ 904, the LLRs $\Lambda_c$ 905 of the LLR mappers 806 and the channel decoder inputs $\Lambda_c$ 906. Time flows from left to right in figure 9 in accordance with a time axis 907.

In contrast to the baseband receiver 600 the size of the soft-bit/LLR buffer 811 is increased to store cell specific soft-bits/LLRs $\Lambda_c$, c=1...C and soft-combining is not done as part of the buffer 811. Rather, the stored cell specific soft-bits/LLRs $\Lambda_c$, c=1...C are all fed to the channel decoder 809 which includes a soft-combining functionality. Soft-combining in the channel decoder 809 allows that soft-combining is not only done by simple addition but may also include non-linear mechanisms like multiple concurrent individual cell decoding potentially in addition to addition soft-combined decoding. From the multiple channel decoder outputs the result passing the cyclic redundancy check (CRC) may then be chosen as output of the channel decoder 809.

It should be noted that also equalizer architectures may be used having the soft-bit/LLR buffer not in the IRX to ORX interface but as part of either IRX or ORX.

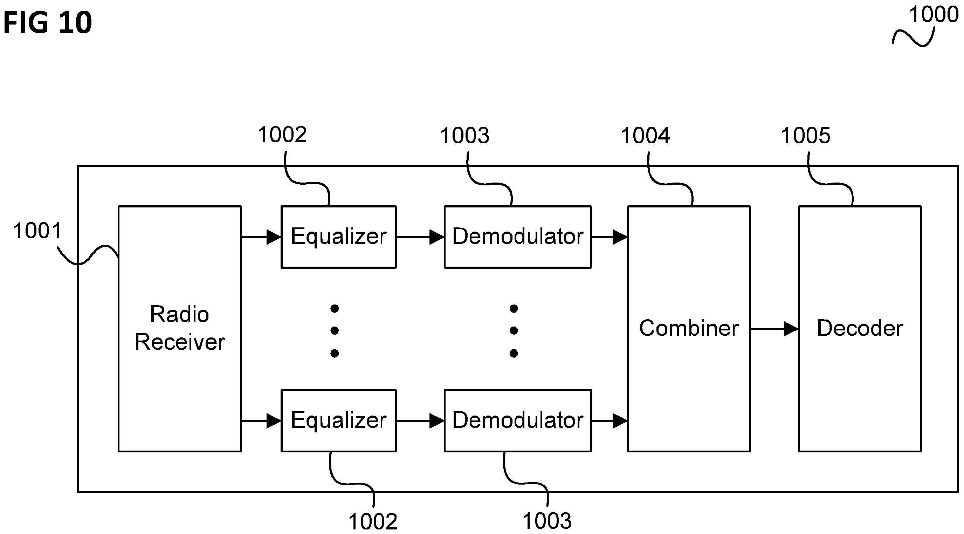

In general, according to various examples, a communication terminal is provided as illustrated in figure 10.

The communication terminal 1000 comprises a radio frequency receiver 1001 configured to receive a signal comprising, for each communication channel of a plurality of communication channels, a signal component transmitted via the communication channel, wherein each signal component is modulated based on a common modulation symbol shared by the plurality of communication channels.

The communication terminal 1000 further comprises an equalizer 1002 for each communication channel configured to equalize the signal received via the communication channel based on one or more channel parameters of the communication channel and a demodulator 1003 for each communication channel of the plurality of communication channels configured to calculate probability information representing, for each of a plurality of information bits, a probability for the information bit to be equal to a particular binary value based on the signal received equalized for the communication channel.

Further, the communication terminal 1000 comprises a combiner 1004 configured to combine the probability information calculated for the plurality of communication channels and a decoder 1005 configured to generate reconstructed useful data based on the combined probability information.

In other words, the equalizer outputs ($\underline{d}_c$ in the above examples) are individually mapped to probability information (e.g. LLRs or soft bits $\Lambda_c$ in the above examples), i.e. they are not combined (directly) but each one is respectively mapped to the probability information and after this mapping, the probability information is combined to reconstruct useful data (e.g. in the form of the information bits) represented by the modulation symbol.

For example, a generalized soft-bit interface is provided that allows equalizer algorithm independent soft-combining.

The probability for the information bit to be equal to a particular binary value is for example the probability for the information bit to be equal to 1 or, equivalently, the probability for the information bit to be equal to 0.

The components of the communication terminal (e.g. the radio receiver, the equalizers, the demodulators, the combiner and the decoder) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions which will be described in more detail below may also be understood as a "circuit".

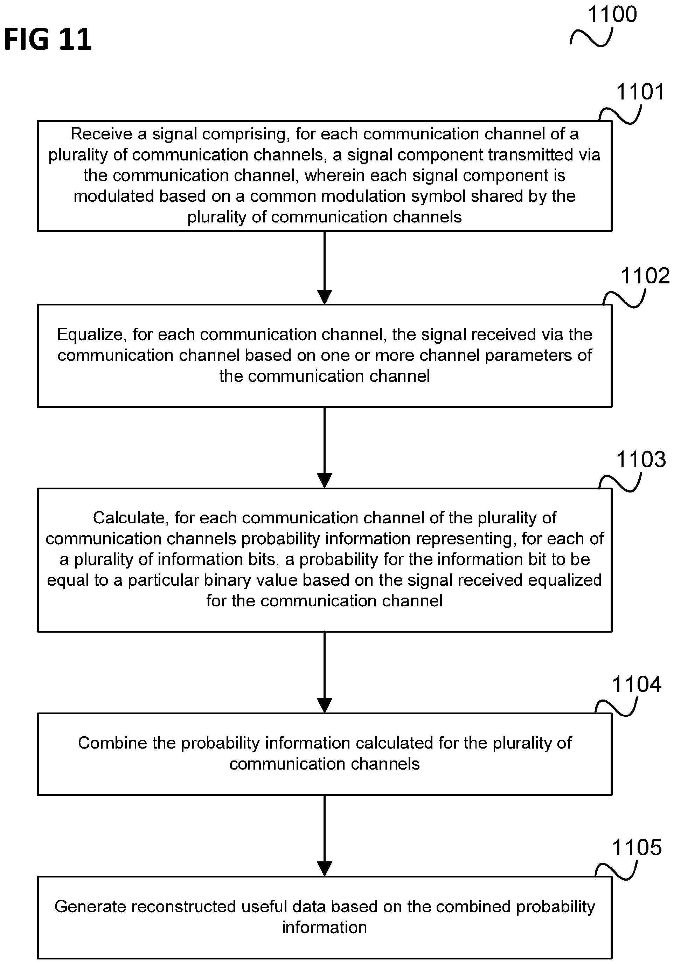

The communication terminal 1000 for example carries out a method for receiving data as illustrated in figure 11.

Figure 11 shows a flow diagram 1100, for example carried out by a communication terminal.

In 1001, the communication terminal receives a signal comprising, for each communication channel of a plurality of communication channels, a signal component transmitted via the communication channel, wherein each signal component is modulated based on a common modulation symbol shared by the plurality of communication channels.

In 1002, the communication terminal equalizes, for each communication channel, the signal received via the communication channel based on one or more channel parameters of the communication channel.

In 1003, the communication terminal calculates, for each communication channel of the plurality of communication channels probability information representing, for each of a plurality of information bits, a probability for the information bit to be equal to a particular binary value based on the signal received equalized for the communication channel.

In 1004, the communication terminal combines the probability information calculated for the plurality of communication channels.

In 1005, the communication terminal generates reconstructed useful data based on the combined probability information.

The following examples pertain to further embodiments.

Example 1 is a communication terminal as illustrated in figure 10.

In Example 2, the subject matter of Example 1 may optionally include the radio frequency receiver comprising at least one antenna and wherein the signal is based on a radio frequency signal via the at least one antenna.

In Example 3, the subject matter of Example 2 may optionally include the radio frequency receiver comprising a receiver frontend for processing the radio frequency signal.

In Example 4, the subject matter of any one of Examples 2-3 may optionally include that the radio frequency receiver being further configured to convert the radio frequency signal into baseband.

In Example 5, the subject matter of any one of Examples 1-4 may optionally include the signal being a baseband signal comprising a plurality of in-phase and quadrature component samples.

In Example 6, the subject matter of any one of Examples 1-5 may optionally include a synchronization buffer configured to compensate at least one of timing differences or channel access delay differences between the signal components.

In Example 7, the subject matter of any one of Examples 1-6 may optionally include the plurality of communication channels being communication channels for different base stations.

In Example 8, the subject matter of any one of Examples 1-7 may optionally include at least two of the equalizers being configured to equalize the signal based on different equalization algorithms.

In Example 9, the subject matter of any one of Examples 1-8 may optionally include at least one of the equalizers being configured to equalize the signal received based on a first matched filter, first zero forcing, first minimum mean square error or first interference cancellation and at least another one of the equalizers being configured to equalize the signal received based on a second matched filter, second zero forcing, second minimum mean square error or second interference cancellation.

In Example 10, the subject matter of any one of Examples 1-9 may optionally include, for at least one communication channel or each of the communication channels, the equalizer for the communication channel being configured to provide at least one of a signal power estimate or a noise power estimate for the communication channel to the demodulator for the communication channel and the demodulator being configured to calculate the probability information based on the signal power estimate, the noise power estimate or a combination of the signal power estimate and the noise power estimate.

In Example 11, the subject matter of any one of Examples 1-10 may optionally include the probability information being a likelihood ratio or a log likelihood ratio.

In Example 12, the subject matter of any one of Examples 1-11 may optionally include the probability information of an information bit specifying a likelihood for the information bit to be equal to a value of one or specifying a probability for the information bit to be equal to a value of.

In Example 13, the subject matter of any one of Examples 1-12 may optionally include the probability information comprising a soft bit for each information bit.

In Example 14, the subject matter of one of Example 13 may optionally include combining the probability information comprising adding the soft bits over the communication channels for each information bit.

In Example 15, the subject matter of any one of Examples 1-14 may optionally include the demodulator being configured to calculate modulation symbol probability information representing, for each of a plurality of predefined modulation symbols, a probability for the modulation symbol to be equal to the predefined modulation symbol based on the signal received equalized for the communication channel and to calculate the probability information for the information bits based on the modulation symbol probability information.

In Example 16, the subject matter of Example 15 may optionally include the demodulator being configured to calculate the probability information for an information bit based on a probability, for each communication channel, for the modulation symbol to be a member of a subset of the predefined modulation symbols corresponding to the particular binary value based on a summation of the probabilities over the communication channels or determining the maximum of the probabilities over the communication channels.

In Example 17, the subject matter of any one of Examples 1-16 may optionally include the combiner being configured to compensate differences of output times of the probability information between the demodulators.

In Example 18, the subject matter of any one of Examples 1-17 may optionally include the combiner being configured to compensate differences of output times of the probability information between the demodulators by successively accumulating values included in the probability information.

In Example 19, the subject matter of any one of Examples 1-18 may optionally include a channel decoder configured to perform the combining and the generation of the reconstructed useful data.

In Example 20, the subject matter of any one of Examples 1-19 may optionally include each demodulator being configured to calculate the probability information based on the signal received equalized for the communication channel and independent of the signal received equalized for the other communication channels.

In Example 21, the subject matter of any one of Examples 1-20 may optionally include the modulation symbol being a complex constellation symbol.

In Example 22, the subject matter of Example 21 may optionally include each signal component being modulated based on the same modulation technique and the plurality of predefined modulation symbols being possible modulation symbols according to the modulation technique.

In Example 23, the subject matter of Example 22 may optionally include the modulation technique being binary phase shift keying, quadrature phase shift keying or quadrature amplitude modulation.

Example 24 is a method for receiving data as illustrated in figure 11.

In Example 25, the subject matter of Example 24 may optionally include the receiving of the signal comprising receiving a radio frequency signal via at least one antenna.

In Example 26, the subject matter of Example 25 may optionally include the receiving of the signal comprising frontend processing of the radio frequency signal by a receiver frontend.

In Example 27, the subject matter of Example 25 may optionally include the receiving of the signal comprising conversion of the radio frequency signal into baseband.

In Example 28, the subject matter of Example 24 may optionally include the signal being a baseband signal comprising a plurality of in-phase and quadrature component samples.

In Example 29, the subject matter of any one of Examples 24-28 may optionally include compensating at least one of timing differences or channel access delay differences between the signal components.

In Example 30, the subject matter of any one of Examples 24-29 may optionally include the plurality of communication channels being communication channels for different base stations.

In Example 31, the subject matter of any one of Examples 24-30 may optionally include the method comprising equalizing, for at least two communication channels of the plurality of communication channels, the signal based on different equalization algorithms.

In Example 32, the subject matter of any one of Examples 24-31 may optionally include equalizing the signal received for at least one communication channel of the plurality of communication channels based on a first matched filter, first zero forcing, first minimum mean square error or first interference cancellation and for at least another one of the communication channels of the plurality of communication channels based on a second matched filter, second zero forcing, second minimum mean square error or second interference cancellation.

In Example 33, the subject matter of any one of Examples 24-32 may optionally include, for at least one communication channel or each of the communication channels, providing at least one of a signal power estimate or a noise power estimate for the communication channel and calculating the probability information based on the signal power estimate, the noise power estimate or a combination of the signal power estimate and the noise power estimate.

In Example 34, the subject matter of any one of Examples 24-33 may optionally include the probability information being a likelihood ratio or a log likelihood ratio.

In Example 35, the subject matter of any one of Examples 24-34 may optionally include the probability information of an information bit specifying a likelihood for the information bit to be equal to a value of one or specifying a probability for the information bit to be equal to a value of zero.

In Example 36, the subject matter of any one of Examples 24-35 may optionally include the probability information comprising a soft bit for each information bit.

In Example 37, the subject matter of Example 36 may optionally include the combining the probability information comprising adding the soft bits over the communication channels for each information bit.

In Example 38, the subject matter of any one of Examples 24-37 may optionally include calculating modulation symbol probability information representing, for each of a plurality of predefined modulation symbols, a probability for the modulation symbol to be equal to the predefined modulation symbol based on the signal received equalized for the communication channel and calculating the probability information for the information bits based on the modulation symbol probability information.

In Example 39, the subject matter of Example 38 may optionally include calculating the probability information for an information bit based on a probability, for each communication channel, for the modulation symbol to be a member of a subset of the predefined modulation symbols corresponding to the particular binary value based on a summation of the probabilities over the communication channels or determining the maximum of the probabilities over the communication channels.

In Example 40, the subject matter of any one of Examples 24-39 may optionally include compensating differences of output times of the probability information.

In Example 41, the subject matter of any one of Examples 24-40 may optionally include compensating differences of output times of the probability information by successively accumulating values included in the probability information.

In Example 42, the subject matter of any one of Examples 24-41 may optionally include the combining and the generation of the reconstructed useful data being performed by a channel decoder.

In Example 43, the subject matter of any one of Examples 24-42 may optionally include calculating the probability information based on the signal received equalized for the communication channel and independent of the signal received equalized for the other communication channels.

In Example 44, the subject matter of any one of Examples 24-43 may optionally include the modulation symbol being a complex constellation symbol.

In Example 45, the subject matter of Example 44 may optionally include each signal component being modulated based on the same modulation technique and the plurality of predefined modulation symbols being possible modulation symbols according to the modulation technique.

In Example 46, the subject matter of any one of Examples 45 may optionally include the modulation technique being binary phase shift keying, quadrature phase shift keying or quadrature amplitude modulation.

Example 47 is a computer readable medium having recorded instructions thereon which, when executed by a processor, make the processor perform a method for receiving data according to any one of Examples 24 to 46.

It should be noted that one or more of the features of any of the examples above may be combined with any one of the other examples.

While specific aspects have been described, it should be understood by those skilled in the art that various changes in form and detail may be made therein without departing from the scope of the aspects of this disclosure as defined by the appended claims.

## Claims

1.  A communication terminal (103) comprising:

    a radio frequency receiver configured to receive a single signal comprising, for each communication channel of a plurality of communication channels, a signal component transmitted via the communication channel, wherein each signal component is modulated based on a common modulation symbol shared by the plurality of communication channels;
    an equalizer (410) for each communication channel of the plurality of communication channels configured to equalize the signal component received via the communication channel based on one or more channel parameters of the communication channel;
    a demodulator (406) for each communication channel of the plurality of communication channels configured to calculate probability information representing, for each of a plurality of information bits, a probability for the information bit to be equal to a particular binary value based on the equalized signal component received for the communication channel;
    a combiner (407) configured to combine the probability information calculated for the plurality of communication channels; and
    a decoder (409) configured to generate reconstructed useful data based on the combined probability information.

2.  The communication terminal of claim 1, wherein the radio frequency receiver comprises at least one antenna and wherein the signal is based on a radio frequency signal received via the at least one antenna.

3.  The communication terminal of claim 2, wherein the radio frequency receiver comprises a receiver frontend for processing the radio frequency signal.

4.  The communication terminal of claim 2 or 3, wherein the radio frequency receiver is further configured to convert the radio frequency signal into baseband.

5.  The communication terminal of any one of claims 1 to 4, wherein the signal is a baseband signal comprising a plurality of in-phase and quadrature component samples.

6.  The communication terminal of any one of claims 1 to 5, further comprising a synchronization buffer configured to compensate at least one of timing differences or channel access delay differences between the signal components.

7.  The communication terminal of any one of claims 1 to 6, wherein the plurality of communication channels are communication channels for different base stations.

8.  The communication terminal of any one of claims 1 to 7, wherein the probability information is a likelihood ratio or a log likelihood ratio.

9.  The communication terminal of any one of claims 1 to 8, wherein the probability information of an information bit specifies a likelihood for the information bit to be equal to a value of one or a probability for the information bit to be equal to a value of zero.

10. The communication terminal of any one of claims 1 to 9, wherein the probability information comprises a soft bit for each information bit.

11. The communication terminal of claim 10, wherein combining the probability information comprises adding the soft bits over the communication channels for each information bit.

12. The communication terminal of any one of claims 1 to 11, wherein the demodulator is configured to calculate modulation symbol probability information representing, for each of a plurality of predefined modulation symbols, a probability for the modulation symbol to be equal to the predefined modulation symbol based on the signal received equalized for the communication channel and to calculate the probability information for the information bits based on the modulation symbol probability information.

13. The communication terminal of claim 12, wherein the demodulator is configured to calculate the probability information for an information bit based on a probability, for each communication channel, for the modulation symbol to be a member of a subset of the predefined modulation symbols corresponding to the particular binary value based on a summation of the probabilities over the communication channels or determining the maximum of the probabilities over the communication channels.

14. A method (1100) for receiving data comprising:

receiving (1101) a single signal comprising, for each communication channel of a plurality of communication channels, a signal component transmitted via the communication channel, wherein each signal component is modulated based on a common modulation symbol shared by the plurality of communication channels;
equalizing (1102), for each communication channel of the plurality of communication channels, the signal component received via the communication channel based on one or more channel parameters of the communication channel;
calculating (1103), for each communication channel of the plurality of communication channels probability information representing, for each of a plurality of information bits, a probability for the information bit to be equal to 1 based on the equalized signal component received for the communication channel;
combining (1104) the probability information calculated for the plurality of communication channels; and
generating (1105) reconstructed useful data based on the combined probability information.

15. A computer readable medium having recorded instructions thereon which, when executed by a processor, make the processor perform a method for receiving data according to claim 14.

**Patentansprüche**

1. Kommunikationsendgerät (103), umfassend:

einen Hochfrequenzempfänger, der so konfiguriert ist, dass er ein einziges Signal empfängt, das für jeden Kommunikationskanal einer Mehrzahl von Kommunikationskanälen eine Signalkomponente umfasst, die über den Kommunikationskanal gesendet wird, wobei jede Signalkomponente basierend auf einem gemeinsamen Modulationssymbol moduliert wird, das sich die Mehrzahl von Kommunikationskanälen teilt;
einen Entzerrer (410) für jeden Kommunikationskanal der Mehrzahl von Kommunikationskanälen, der zum Entzerren der über den Kommunikationskanal empfangenen Signalkomponente basierend auf einem oder mehreren Kanalparametern des Kommunikationskanals konfiguriert ist;
einen Demodulator (406) für jeden Kommunikationskanal der Mehrzahl von Kommunikationskanälen, der so konfiguriert ist, dass er Wahrscheinlichkeitsinformationen, die für jedes einer Mehrzahl von Informationsbits eine Wahrscheinlichkeit darstellen, dass das Informationsbit gleich einem bestimmten Binärwert ist, basierend auf der entzerrten Signalkomponente berechnet, die für den Kommunikationskanal empfangen wird;
einen Kombinator (407), der so konfiguriert ist, dass er die Wahrscheinlichkeitsinformationen kombiniert, die für die Mehrzahl von Kommunikationskanälen berechnet werden; und
einen Decoder (409), der zum Erzeugen von wiederhergestellten verwendbaren Daten basierend auf den kombinierten Wahrscheinlichkeitsinformationen konfiguriert ist.

2. Kommunikationsendgerät nach Anspruch 1, wobei der Hochfrequenzempfänger mindestens eine Antenne umfasst, und wobei das Signal auf einem Hochfrequenzsignal basiert, das über die mindestens eine Antenne empfangen wird.

3. Kommunikationsendgerät nach Anspruch 2, wobei der Hochfrequenzempfänger ein Empfänger-Frontend zum Verarbeiten des Hochfrequenzsignals umfasst.

4. Kommunikationsendgerät nach Anspruch 2 oder 3, wobei der Hochfrequenzempfänger ferner zum Umsetzen des Hochfrequenzsignals in das Basisband umfasst.

5. Kommunikationsendgerät nach einem der Ansprüche 1 bis 4, wobei das Signal ein Basisbandsignal ist, das eine Mehrzahl von Abtastwerten von Inphase- und Quadratur-Komponenten umfasst.

6. Kommunikationsendgerät nach einem der Ansprüche 1 bis 5, ferner umfassend einen Synchronisierungspuffer, der zum Kompensieren mindestens eines von Taktdifferenzen oder Kanalzugriffsverzögerungsdifferenzen zwischen Signalkomponenten konfiguriert ist.

7. Kommunikationsendgerät nach einem der Ansprüche 1 bis 6, wobei es sich bei der Mehrzahl von Kommunikationskanälen um Kommunikationskanäle für verschiedene Basisstationen handelt.

8. Kommunikationsendgerät nach einem der Ansprüche 1 bis 7, wobei es sich bei den Wahrscheinlichkeitsinformationen um ein Likelihood-Verhältnis oder ein Log-Likelihood-Verhältnis handelt.

9. Kommunikationsendgerät nach einem der Ansprüche 1 bis 8, wobei die Wahrscheinlichkeitsinformationen eines Informationsbits eine Wahrscheinlichkeit, dass das Informationsbit gleich einem Wert von eins ist, oder eine Wahrscheinlichkeit spezifizieren, dass das Informationsbit gleich einem Wert von null ist.

10. Kommunikationsendgerät nach einem der Ansprüche 1 bis 9, wobei die Wahrscheinlichkeitsinformationen ein Softbit für jedes Informationsbit umfassen.

11. Kommunikationsendgerät nach Anspruch 10, wobei das Kombinieren der Wahrscheinlichkeitsinformationen ein Addieren der Softbits über die Kommunikationskanäle für jedes Informationsbit umfasst.

12. Kommunikationsendgerät nach einem der Ansprüche 1 bis 11, wobei der Demodulator so konfiguriert ist, dass er Modulationssymbol-Wahrscheinlichkeitsinformationen, die für jedes einer Mehrzahl von vordefinierten Modulationssymbolen eine Wahrscheinlichkeit darstellen, dass das Modulationssymbol gleich dem vordefinierten Modulationssymbol ist, basierend auf dem empfangenen, für den Kommunikationskanal entzerrten Signal berechnet, und die Wahrscheinlichkeitsinformationen für die Informationsbits basierend auf den Modulationssymbol-Wahrscheinlichkeitsinformationen berechnet.

13. Kommunikationsendgerät nach Anspruch 12, wobei der Demodulator so konfiguriert ist, dass er die Wahrscheinlichkeitssymbole für ein Informationsbit basierend auf einer Wahrscheinlichkeit für jeden Kommunikationskanal, dass das Modulationssymbol ein Mitglied eines Teilsatzes der vordefinierten Modulationssymbole ist, das dem bestimmten Binärwert entspricht, basierend auf einer Summierung der Wahrscheinlichkeiten über die Kommunikationskanäle oder einem Bestimmen des Maximums der Wahrscheinlichkeiten über die Kommunikationskanäle berechnet.

14. Verfahren (1100) zum Empfangen von Daten, umfassend:

Empfangen (1101) eines einzigen Signals, das für jeden Kommunikationskanal einer Mehrzahl von Kommunikationskanälen eine Signalkomponente umfasst, die über den Kommunikationskanal gesendet wird, wobei jede Signalkomponente basierend auf einem gemeinsamen Modulationssymbol moduliert wird, das sich die Mehrzahl von Kommunikationskanälen teilt;
Entzerren (1102) für jeden Kommunikationskanal der Mehrzahl von Kommunikationskanälen der über den Kommunikationskanal empfangenen Signalkomponente basierend auf einem oder mehreren Kanalparametern des Kommunikationskanals;
Berechnen (1103) für jeden Kommunikationskanal der Mehrzahl von Kommunikationskanälen von Wahrscheinlichkeitsinformationen, die für jedes einer Mehrzahl von Informationsbits eine Wahrscheinlichkeit darstellen, dass das Informationsbit gleich 1 ist, basierend auf der entzerrten Signalkomponente, die für den Kommunikationskanal empfangen wird;

Kombinieren (1104) der Wahrscheinlichkeitsinformationen, die für die Mehrzahl von Kommunikationskanälen berechnet werden; und

Erzeugen (1105) von wiederhergestellten verwendbaren Daten basierend auf den kombinierten Wahrscheinlichkeitsinformationen.

15. Computerlesbares Medium mit darauf aufgezeichneten Anweisungen, die bei Ausführung durch einen Prozessor den Prozessor zum Durchführen eines Verfahrens zum Empfangen von Daten nach Anspruch 14 veranlassen.

**Revendications**

1. Terminal de communication (103) comprenant :

un récepteur radiofréquence configuré pour recevoir un seul signal comprenant, pour chaque canal de communication d'une pluralité de canaux de communication, un composant de signal transmis par le biais du canal de communication, chaque composant de signal étant modulé sur la base d'un symbole de modulation commun partagé par la pluralité de canaux de communication ;

un égaliseur (410) pour chaque canal de communication de la pluralité de canaux de communication configuré pour égaliser le composant de signal reçu par le biais du canal de communication sur la base d'un ou de plusieurs paramètres de canal du canal de communication ;

un démodulateur (406) pour chaque canal de communication de la pluralité de canaux de communication configuré pour calculer des informations de probabilité représentant, pour chacun d'une pluralité de bits d'informations, une probabilité que le bit d'informations soit égal à une valeur binaire particulière sur la base du composant de signal égalisé reçu pour le canal de communication ;

un combineur (407) configuré pour combiner les informations de probabilité calculées pour la pluralité de canaux de communication ; et

un décodeur (409) configuré pour générer des données utiles reconstruites sur la base des informations de probabilité combinées.

2. Terminal de communication selon la revendication 1, dans lequel le récepteur radiofréquence comprend au moins une antenne et le signal étant basé sur un signal radiofréquence reçu par le biais de l'au moins une antenne.

3. Terminal de communication selon la revendication 2, dans lequel le récepteur radiofréquence comprend un récepteur frontal destiné à traiter le signal radiofréquence.

4. Terminal de communication selon la revendication 2 ou 3, dans lequel le récepteur radiofréquence est en outre configuré pour convertir le signal radiofréquence en bande de base.

5. Terminal de communication selon l'une quelconque des revendications 1 à 4, dans lequel le signal est un signal de bande de base comprenant une pluralité d'échantillons de composant en phase et en quadrature.

6. Terminal de communication selon l'une quelconque des revendications 1 à 5, comprenant en outre une mémoire tampon de synchronisation configurée pour compenser des différences de timing et/ou des différences de délai d'accès au canal entre les composants de signal.

7. Terminal de communication selon l'une quelconque des revendications 1 à 6, dans lequel la pluralité de canaux de communication sont des canaux de communication pour différentes stations de base.

8. Terminal de communication selon l'une quelconque des revendications 1 à 7, dans lequel les informations de probabilité sont un taux de probabilité ou un taux de probabilité de journal.

9. Terminal de communication selon l'une quelconque des revendications 1 à 8, dans lequel les informations de probabilité d'un bit d'informations spécifient une probabilité que le bit d'informations soit égal à une valeur de un ou une probabilité que le bit d'informations soit égal à une valeur de zéro.

10. Terminal de communication selon l'une quelconque des revendications 1 à 9, dans lequel les informations de probabilité comprennent un bit « soft » pour chaque bit d'informations.

**11.** Terminal de communication selon la revendication 10, dans lequel la combinaison des informations de probabilité comprend l'ajout des bits « soft » sur les canaux de communication pour chaque bit d'informations.

**12.** Terminal de communication selon l'une quelconque des revendications 1 à 11, dans lequel le démodulateur est configuré pour calculer des informations de probabilité de symbole de modulation représentant, pour chacun d'une pluralité de symboles de modulation prédéfinis, une probabilité que le symbole de modulation soit égal au symbole de modulation prédéfini sur la base du signal reçu égalisé pour le canal de communication et pour calculer les informations de probabilité pour les bits d'informations sur la base des informations de probabilité de symbole de modulation.

**13.** Terminal de communication selon la revendication 12, dans lequel le démodulateur est configuré pour calculer les informations de probabilité pour un bit d'informations sur la base d'une probabilité, pour chaque canal de communication, que le symbole de modulation soit un élément d'un sous-ensemble de symboles de modulation prédéfinis correspondant à la valeur binaire particulière sur la base d'une somme des probabilités sur les canaux de communication ou d'une détermination du maximum des probabilités sur les canaux de communication.

**14.** Procédé (1100) pour recevoir des données comprenant :

recevoir (1101) un seul signal comprenant, pour chaque canal de communication d'une pluralité de canaux de communication, un composant de signal transmis par le biais du canal de communication, chaque composant de signal étant modulé sur la base d'un symbole de modulation commun partagé par la pluralité de canaux de communication ;
égaliser (1102), pour chaque canal de communication de la pluralité de canaux de communication, le composant de signal reçu par le biais du canal de communication sur la base d'un ou de plusieurs paramètres de canal du canal de communication ;
calculer (1103), pour chaque canal de communication de la pluralité de canaux de communication des informations de probabilité représentant, pour chacun d'une pluralité de bits d'informations, une probabilité que le bit d'informations soit égal à 1 sur la base du composant de signal égalisé reçu pour le canal de communication ;
combiner (1104) les informations de probabilité calculées pour la pluralité de canaux de communication ; et
générer (1105) des données utiles reconstruites sur la base des informations de probabilité combinées.

**15.** Support lisible par ordinateur comportant des instructions enregistrées qui, lorsqu'elles sont exécutées par un processeur, amènent le processeur à mettre en œuvre un procédé pour recevoir des données selon la revendication 14.

**FIG 1**

EP 3 182 662 B1

**FIG 2**

200

202 — BB receiver supporting soft combining — 208 — 203

IRX  204  205  e.g. $|\hat{\underline{H}}_1|^4$  206  207  ORX  209

IQ samples from RF

201

$\underline{e}$

sync. buffer

IQ symbols $\underline{e}$

IRX cell$_1$ — $\hat{\underline{d}}_1$ — EQ: $\hat{\underline{H}}_1^H$ — $\hat{S}_1$ / $\hat{N}_1$

210  e.g. $N_0 \cdot |\hat{\underline{H}}_1|^2$

IRX cell$_2$ — $\hat{\underline{d}}_2$ — EQ: $\hat{\underline{H}}_2^H$ — $\hat{S}_2$ / $\hat{N}_2$

$\underline{e}_1$
$\underline{e}_2$
$\underline{e}_C$

205  210  205

IRX cell$_C$ — $\hat{\underline{d}}_C$ — EQ: $\hat{\underline{H}}_C^H$ — $\hat{S}_C$ / $\hat{N}_C$

MRC $\Sigma$ — $\hat{S}$ / $\hat{N}$

$\hat{\underline{d}}$

Mod. to LLR mapper — $\dfrac{\Pr\{b=1|\hat{d}\}}{\Pr\{b=0|\hat{d}\}}$

$\Lambda$

IRX to ORX interface — soft-bits / LLRs — $\Lambda$

$\Lambda$

channel decoder incl. de-inter-leaver

decoded bits to modem / PS

210  211

EP 3 182 662 B1

**FIG 3**

EP 3 182 662 B1

# FIG 4

EP 3 182 662 B1

# FIG 5

500

507

$t$

**501**
NB TX
signal

cell 1 , TTI $n$

cell 2 , TTI $n$

cell 1 channel
access delay

cell 2 channel access delay

one signal
stream for
containing
all cells

**502**
UE RX
signal $\underline{e}$

cell 1 , TTI $n$

cell 2 , TTI $n$

seperate
signal
streams
per cell

$[\underline{e}]_k$

$[\underline{e}_1]_{k+\delta1}$

sync.
buffer
outputs
$\underline{e}_c$

**503**

$[\underline{e}_2]_{k+\delta2}$

cell 1 , TTI $n$

cell 2 , TTI $n$

cell 2 EQ latency

cell 1 EQ latency

EQ
outputs
$\hat{\underline{d}}_c$

**504**

cell 1 , TTI $n$

cell 2 , TTI $n$

LLR
mapper
output $\Lambda_c$

**505**

cell 1 , TTI $n$

cell 2 , TTI $n$

Channel
decoder
input $\Lambda$

**506**

cell 1 ,
TTI $n$-1
cell 2 ,
TTI $n$-1

cell 1 ,
TTI $n$
cell 2 ,
TTI $n$

EP 3 182 662 B1

19

**FIG 6**

600

602 — BB receiver supporting soft combining 608 603

IRX — 604 605 — 606 — ORX 609

IQ samples from RF

601

$\underline{e}$

sync. buffer

IQ symbols

$\underline{e}$

IRX cell$_1$ — $\underline{e}_1$ — $\hat{\underline{d}}_1$ — $\hat{S}_1$ — EQ: $\hat{\underline{H}}_1^H$ — $\hat{N}_1$ — 610 — Mod. to LLR mapper — $\Lambda_1$

IRX cell$_2$ — $\underline{e}_2$ — $\hat{\underline{d}}_2$ — $\hat{S}_2$ — EQ: $\hat{\underline{H}}_2^{-1}$ — $\hat{N}_2$ — 610 — Mod. to LLR mapper — $\Lambda_2$

605 — 605 — 606 — 606

IRX cell$_C$ — $\underline{e}_C$ — $\hat{\underline{d}}_C$ — $\hat{S}_C$ — EQ: MMSE — $\hat{N}_C$ — Mod. to LLR mapper — $\Lambda_C$

610

IRX to ORX interface

soft-bits / LLRs

$\oplus$

$\Lambda$

611

$\Lambda$

channel decoder incl. de-interleaver

decoded bits to modem / PS

EP 3 182 662 B1

**FIG 7**

701 NB TX signal

cell 1 , TTI $n$

cell 2 , TTI $n$

cell 1 channel access delay

cell 2 channel access delay

702 UE RX signal $\underline{e}$

cell 1 , TTI $n$

cell 2 , TTI $n$

$[\underline{e}]_k$     $[\underline{e}_1]_{k+\delta1}$, e.g.  $\delta1=\delta2$

703 sync. buffer outputs $\underline{e}_c$

cell 1 , TTI $n$

$[\underline{e}_2]_{k+\delta2}$     cell 2 , TTI $n$

cell 1 EQ latency     cell 2 EQ latency

EQ outputs $\hat{\underline{d}}_c$     704

cell 1 , TTI $n$

cell 2 , TTI $n$

705 LLR mapper output $\Lambda_c$

cell 1 , TTI $n$

cell 2 , TTI $n$

Channel decoder input $\Lambda$     706

| cell 1 , TTI n-1 |
| cell 2 , TTI n-1 |

| cell 1 , TTI n |
| cell 2 , TTI n |

one signal stream for containing all cells

seperate signal streams per cell

707

700

EP 3 182 662 B1

**FIG 8**

EP 3 182 662 B1

# FIG 9

**900**

**907**

*t*

**901** NB TX signal

cell 1 , TTI *n*

cell 2 , TTI *n*

cell 1 channel access delay — cell 2 channel access delay

one signal stream for containing all cells

**902** UE RX signal $\underline{e}$

cell 1 , TTI *n*

cell 2 , TTI *n*

$[\underline{e}]_k$   $[\underline{e}_1]_{k+\delta 1}$, e.g. $\delta 1 = \delta 2$

seperate signal streams per cell

**903** sync. buffer outputs $\underline{e}_c$

cell 1 , TTI *n*

$[\underline{e}_2]_{k+\delta 2}$   cell 2 , TTI *n*

cell 1 EQ latency — cell 2 EQ latency

EQ **904** outputs $\hat{\underline{d}}_c$

cell 1 , TTI *n*

cell 2 , TTI *n*

LLR **905** mapper output $\Lambda_c$

cell 1 , TTI *n*

cell 2 , TTI *n*

Channel decoder inputs $\Lambda_c$

**906**

cell 1, TTI *n-1*

cell 2, TTI *n-1*

cell 1, TTI *n*

cell 2, TTI *n*

EP 3 182 662 B1

**FIG 10**

EP 3 182 662 B1

**FIG 11**

1100

1101

Receive a signal comprising, for each communication channel of a plurality of communication channels, a signal component transmitted via the communication channel, wherein each signal component is modulated based on a common modulation symbol shared by the plurality of communication channels

1102

Equalize, for each communication channel, the signal received via the communication channel based on one or more channel parameters of the communication channel

1103

Calculate, for each communication channel of the plurality of communication channels probability information representing, for each of a plurality of information bits, a probability for the information bit to be equal to a particular binary value based on the signal received equalized for the communication channel

1104

Combine the probability information calculated for the plurality of communication channels

1105

Generate reconstructed useful data based on the combined probability information

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Joint Processing Downlink COMP Reference Signal Support. *3GPP draft R1-090586 by Texas Instruments,* 03 February 2009

- Comparison of combining schemes for MBMS. *3GPP Tdoc R1-040679 by Mitsubishi Electric,* 18 June 2004